# EUROPEAN PATENT APPLICATION

(11) **EP 3 822 894 A1**
(43) Date of publication of application: **19.05.2021**
(21) Application number: 19382994.2
(22) Date of filing: 13.11.2019
(51) Int. Cl.: G06Q 20/38, G06Q 10/10

(54) **SECURE ELECTRONIC MESSAGING GUARANTEEING INTEGRITY AND NON-REPUDATION**

(71) Applicant: Telefonica Digital España, S.L.U., 28013 Madrid (ES)
(72) Inventor: BREZO FERNÁNDEZ, Félix, 28013 MADRID (ES); RUBIO VIÑUELA, Yaiza, 28013 MADRID (ES); BIANZINO, Aruna, Prem, 28013 MADRID (ES); TORRES VELASCO, Jose, 28013 MADRID (ES); DE LOS SANTOS VILCHEZ, Sergio, 28013 MADRID (ES)
(74) Representative: Herrero & Asociados, S.L.

(57) **Abstract**

It is proposed a method and system to improve the security of electronic messages exchange between two or more users. The proposed electronic messaging mechanism allows guaranteeing the integrity of a message exchange (i.e., no message has been added, modified, reordered, nor removed from the message exchange), as well as its non-repudiation (i.e., users are univocally associated with the message exchange and cannot deny being authors of the messages they sent), using a local or external blockchain.

## Description

### Technical field

The present invention relates to electronic messaging systems and more particularly, to a method and system to leverage the security of electronic messaging exchange improving integrity and non-repudiation of electronic messages.

### Background of the invention

Nowadays, electronic messaging is widely used. A huge number of different messaging systems (email, text messaging, instant messaging, live chatting, etc.) is available to internet users, to be used on any kind of mobile devices and covering different kind of needs. The importance of these messaging systems is increasing as the information they include may be of sensible nature (e.g., medical information), of strategic importance (e.g., financial information), or with legal implications (e.g., used as a proof in penal trials, or to certify private agreements). Hence, guaranteeing the delivery, authenticity, integrity and no-repudiation of electronic messages is a key issue.

In order to preserve message sensible nature, strategical importance and eventual legal implications, national and international legislations are trying to regulate it. For instance, the European Union (EU) requires data, files and personally identifiable information (PII) of the UE citizens not to be stored in servers physically located outside the EU itself.

Legislations have to face a very hard task in this field, as on one side it is really hard to enforce them in such a wide and complex scenario, on the other side, the technologies are evolving at a very fast pace, making it hard for the legislation to follow them. On the other hand, if messaging logs are not secured by a third party or in an immutable way, they may be tampered or deleted by the users on the local device, even using on-the-shelf tools.

At the same time, current solutions either rely on a trusted third party (e.g., commercial solutions for financial and medical information), or do not offer any guarantee about the transmitted data. Furthermore, in the case of third parties, they may not be willing to cooperate and share that information for usage as evidence in trials, while, in the other case evidences may not be valid at all.

Next, some prior art solutions to improve the security of electronic messaging systems are presented. However, as it will be pointed out, they present serious drawbacks:
- SWIFT messaging services (see for example, ps://www.swift.com/node/13491): It is a commercial solution offering a messaging platform for financial services; as such, it guarantees encryption, authentication control, integrity control and non-repudiation of the exchanged messages. However, the Swift solution uses a standard database to store the exchanged messages, not guaranteeing the persistency of a blockchain, not its neutrality and the availability offered by a distributed solution.
- WO2019154966: This patent application discloses a solution which allows securing an email transmission between a sender and a receiver, thanks to the help of a service (transfer agent) which registers a hash of the message into a blockchain. However, the described method only works for email transmission and not for instant messaging. This implies that every single message is secured independently, making it not applicable to message sets, potentially including a huge set of messages, exchanged in a delay-sensitive manner. Furthermore, it does not allow handling multi-user communications.
- CA3051393 A1: This patent application discloses a solution which allows to register (group) conversations from instant messaging into a server by using a bot. However, the proposed solution uses a server to register the conversation (not resistant to modification as a blockchain), and it does not allow for local registration of conversations in the user devices. Furthermore, the proposed solution allows the conversation registry to be accessible only by a subset of users (using their public key to cypher the record), and it does not share the cyphering keys globally in the user group so that anyone can accede to the record. Moreover, it uses a private key to decipher records, and not a key specific to the conversation/contract, making it less robust to key theft, and not allowing users to share it with third parties if needed (e.g., proof in penal trials, or to certify private agreements).
- US2018255130 A1: This patent application discloses a solution which allows to register all events occurring in a mobile device through a blockchain. The solution allows to keep a permanent track also of messages exchanged through messaging systems, but (i) does not allow to register them into a local blockchain, (ii) does not allow to select a specific part of the conversation to be registered, (iii) does not naturally allow to register only a conversation, separated from all other kind of events, (iv) does not cypher the event sequence, (v) does not allow to register a conversation in a messaging system when a user is using multiple devices to connect to it.

Therefore, there is a need of an electronic messaging exchange solution which overcomes the limitations of existing prior art solutions.

### SUMMARY

The problems found in prior art techniques are generally solved or circumvented, and technical advantages are generally achieved, by the disclosed embodiments which provide a method and system to improve the security of electronic messages exchange, ensuring the integrity and non-repudiation of the message.

In other words, it is proposed an electronic messaging mechanism (system) guaranteeing the integrity of a message exchange (i.e., no message has been added, modified, reordered, nor removed from the message exchange), as well as its non-repudiation (i.e., users are univocally associated with the message exchange and cannot deny being authors of the messages they sent). To this extent, a simple digital signature of the exchanged messages only guarantees the integrity of the single message, but not of the whole conversation (message exchange), as the context is lost and cannot be verified, while it may have relevant legal implications.

To achieve this, a local or external blockchain is used (in a specific new and inventive way, that it will be later explained). A blockchain may be defined as a continuously growing list of linked records, called blocks. Each block typically (but it is not mandatory) contains a cryptographic hash of the previous block, a timestamp and transaction data. By design, a blockchain is inherently resistant to modification of the data and represents a natural implementation of an open and distributed ledger that can record transactions between two or more parties in a verifiable and permanent way. Once recorded, the data in any given block cannot be altered retroactively without the alteration of all subsequent blocks, which requires collusion of the network majority.

According to a first aspect, the present invention proposes a method for ensuring the integrity and non-repudiation of an electronic message exchange (a whole electronic message conversation or a part of it) between a group of several electronic user devices, each user device being associated with a different user of an electronic messaging system, the method comprising the following steps:
a) Assigning to each user of the group (each user associated to the user devices of the group), a private cryptographic key and a corresponding public cryptographic key;
b) When any user device of the group generates a message (for example a WhatsApp message or any other type of electronic message) belonging to the message exchange:
   b1) The user device (which generates the message) generating a transaction formed by the generated message together with metadata associated with the generated message and signing the transaction with the private key of the associated user;
   b2) The user device (which generates the message) sending the signed transaction to the rest of user devices of the group and storing the signed transaction in a local memory of the user device;
   b3) The rest of user devices receiving the signed transaction and storing the signed transaction in their local memories;
c) When a new block triggering event happens, a user device of the group retrieving the signed transactions stored in its local memory since the last block of an existing blockchain has been created;
d) An electronic device mining a new block for the existing blockchain and adding it to the existing blockchain and storing the resulting blockchain including the new block in a local memory of the electronic device, where the new created block includes at least the retrieved signed transactions of step c).

In an embodiment, the electronic device performing step d) is the user device which has retrieved the signed transactions in step c), and the method further comprises:
- The user device which has retrieved the signed transactions in step c) sending the new block to the other user devices of the group and, after receiving the new block, each of the rest of user devices of the group, after verifying that the new block is correct, adding the received block to their existing local blockchain stored in each user device.

The first block of the blockchain may be created by a user device of the group of user devices and sent to the rest of user devices of the group; where said first block may include a hash of some time-related publicly-available information.

The local memory where the blockchain is stored, is a permanent local memory, which may be the same or different to the local memory where the signed transactions are stored.

In an embodiment, the electronic device performing step d) is a server (external to the group of user devices) and step d) comprises:
- The server obtaining (e.g. from the user device which has retrieved the signed transactions) the signed transactions ciphered with a cypher key associated to a contract ID identifying the message exchange, where the contract ID and the cypher key are previously shared with all the user devices of the group, before starting the message exchange to be secured (or the contract ID is shared before starting the message exchange and the cypher key is shared when the message exchange has finished);
- The server mining the new block including at least the ciphered signed transactions into the existing blockchain stored in the server and storing the updated blockchain in the server.

In said previous embodiment, the method may further include:
- The server receiving from a user device a Contract ID identifying a message exchange;
- The server retrieving the one or more blocks corresponding to the requested message exchange from the blockchain and verifying that the content of the one or more blocks is correct;
- The server deciphering, with a cypher key previously got from the user, the group of signed transactions included in the one or more blocks and sending the deciphered group of transactions to the user device. Alternatively, the server may send the ciphered group of transactions to the user device without deciphering them.

In this case, the first block of the blockchain is created by the server; where said first block may include a hash of some time-related publicly-available information.

The new block triggering event of step c) may be at least one of the following: the signed transactions stored in the local memory of the user device reach a given pre-established maximum size; a pre-established time limit has passed from the creation of a previous block of the blockchain; the conversation between the group of user devices is finished or a pre-established specific message exchange end message has been entered by any of the users of the group.

The generated message may include text and/or sound and/or video and/or an attached file or any other type of electronic message.

In an embodiment, after step d), the signed transactions retrieved in step c) are deleted from the local memory of the user devices of the group.

In an embodiment, the message exchange whose integrity and non-repudiation is to be ensured, is not the whole conversation between the group of user devices but a part of the whole conversation, where said part is identified by: any of the user devices generating a pre-established specific message to identify the start of the message exchange whose integrity and non-repudiation is to be ensured and any of the users generating a different pre-established specific message to identify the end of the message exchange whose integrity and non-repudiation is to be ensured.

According to a second aspect, the present invention proposes systems for performing any of the above stated methods. More specifically, the present invention proposes a system for ensuring the integrity and non-repudiation of an electronic message exchange between a group of several electronic user devices, each user device being associated with a user, the system comprising:
- A processor configured to assign to each user of the group a private cryptographic key and a corresponding public cryptographic key;
- The group of electronic devices, each comprising a processor configured to:
- When a user device generates a message belonging to the message exchange, generate a transaction formed by the generated message together with metadata associated with the generated message; sign the transaction with the private key of the associated user; send the signed transaction to the rest of users of the group and store the sent or received signed transaction in a local memory;
   where in at least one of the user devices of the group, the processor is also configured to:
- When a new block triggering event happens, retrieve the signed transactions stored in its local memory since the last block of an existing blockchain has been created.

Where the system further includes an electronic device with a processor configured to: mine a new block and add it to the existing blockchain, the new block including at least the retrieved signed transactions and store the resulting blockchain including the new block in a local memory of the electronic device.

In an embodiment, the electronic device is the user device retrieving the signed transactions; said electronic device sends the new block to the other user devices of the group and each of the rest of user devices of the group, after verifying that the new block is correct, adds the received block to the local blockchain stored in each user device.

In an embodiment, the electronic device is a server configured to:
- Obtain the signed transactions ciphered with a cypher key, associated to a contract ID identifying the message exchange, where the contract ID and the cypher key are previously shared with all the user devices of the group, before starting the message exchange to be secured (or the contract ID is shared before starting the message exchange and the cypher key is shared when the message exchange has finished);
- Mine the new block including at least the ciphered signed transactions into an existing blockchain stored in the server and store the updated blockchain in the server.

In a last aspect of the present invention, a computer program is disclosed, comprising computer program code means adapted to perform the steps of the described methods, when said program is run on processing means, said processing means being for example a computer, a digital signal processor, a field-programmable gate array (FPGA), an application-specific integrated circuit (ASIC), a micro-processor, a micro-controller, or any other form of programmable hardware. In other words, a computer program comprising instructions, causing a computer executing the program to perform all steps of the described methods, when the program is run on a computer. A digital data storage medium is also provided for storing a computer program comprising instructions, causing a computer executing the program to perform all steps of the disclosed methods when the program is run on a computer.

Consequently, according to the invention, a method, system and storage medium according to the independent claims are provided. Favourable embodiments are defined in the dependent claims.

Compared to the prior art, the proposed solution provides, among others, the following advantages:
- It ensures no fake identities in the messaging system
- It ensures non-repudiation of the exchanged messages
- It ensures integrity of the message exchange, i.e., no message has been edited, added, removed, nor reordered in the message exchange
- Exchanged messages are stored on the local devices, or in a distributed blockchain but encrypted and not in external servers, preserving message confidentiality
- The integrity and non-repudiation of the message exchange can be verified on the whole conversation or only on a subset of it, allowing to minimize the confidentiality exposure of the users in case of public verification (e.g., trial evidence).
- Furthermore, these properties (advantages) can be verified accessing to the publicly available public key, i.e., without requiring to the involved users to expose private and sensitive information, or the user to share the specific contract ID and cypher key, exposing only the messaging part selected by the user.
- The system allows to guarantee the specified properties for pair and group message exchanges, as well as for text, data, and/or multimedia message exchange, thanks to the independent nature of its support system (i.e., the blockchain)

These and other aspects and advantages of the invention will be apparent from and elucidated with reference to the embodiments described hereinafter.

### BRIEF DESCRIPTION OF THE DRAWINGS

To complete the description that is being made and with the object of assisting in a better understanding of the characteristics of the invention, in accordance with a preferred example of practical embodiment thereof, accompanying said description as an integral part thereof, is a set of drawings wherein, by way of illustration and not restrictively, the following has been represented:
Figure 1 shows a schematic sequenced flow diagram of an example of a message exchange between two users according to one embodiment of the present invention.
Figure 2 shows a schematic sequenced flow diagram of an example of a creation of a new block in the blockchain according to one embodiment of the present invention, using a local blockchain.
Figure 3 shows an example of a message exchange registration with the selection of the beginning and end, according to one embodiment of the present invention.
Figure 4 shows a schematic sequenced flow diagram of an example of the main steps for retrieving of a registered conversation by a user, according to one embodiment of the present invention where the deciphering is made in a system server and an external blockchain is used.
Figure 5 shows a schematic sequenced flow diagram of an example of the main steps for retrieving of a registered conversation by a user, according to one embodiment of the present invention where the deciphering is made in the user equipment and an external blockchain is used.

### DESCRIPTION OF EMBODIMENTS

The present invention may be embodied in specific systems and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

The embodiments of the present invention provide an improvement in the security of an electronic messages exchange between two or more users (also called actors), or in other words of a conversation between two or more users using electronic messages, which guarantees the integrity and non-repudiation of the messages of the electronic messages exchange (a whole conversation or a part of it).

Even though, the term user (or actor) will be employed in the present text and figures as the entity (usually a person) transmitting, receiving or, generally speaking, processing the electronic messages; it is implicit that the users will use an electronic device (called user equipment or user device) to transmit, receive or process the electronic messages. Said electronic device may be a mobile phone, a tablet, a smart phone, a computer, a PC, a laptop or generally speaking electronic device which can communicate through a communication network via electronic messages. This communication network may be a mobile communications network (2G, 3G, 4G, LTE, 5G...) or, generally speaking, any type of communications network.

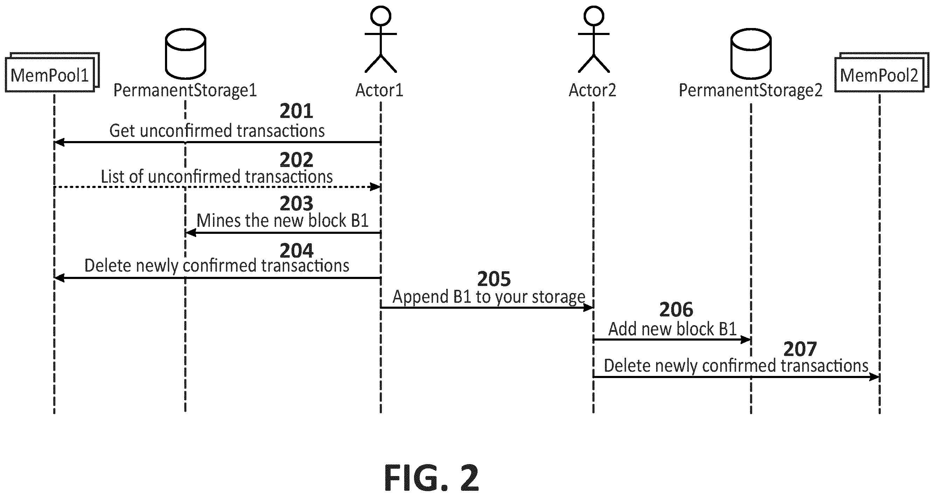

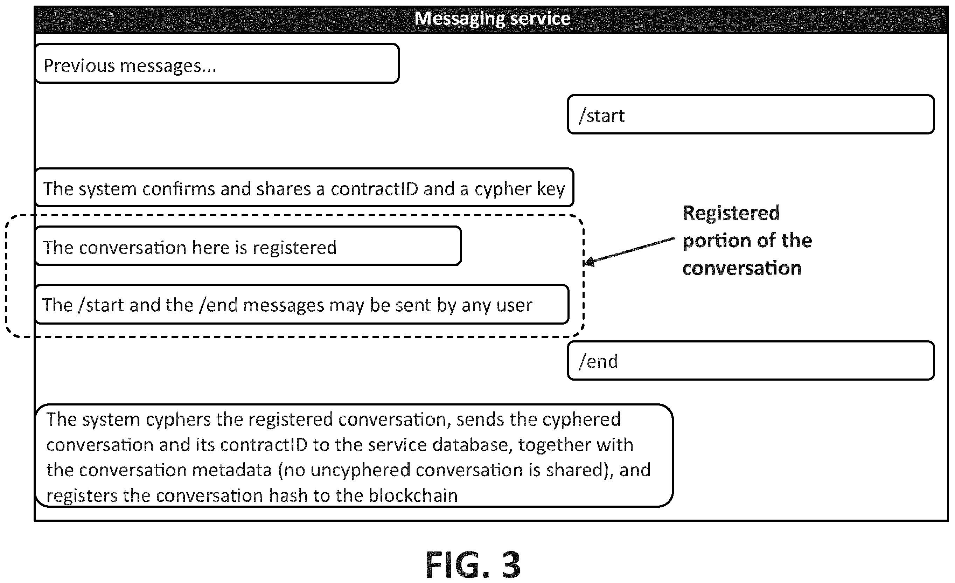

In an embodiment, the following steps are followed to secure (register) the electronic message exchange (ensuring integrity and non-repudiation) performed between two or more users (the steps performed in the user devices may be performed by an application running in each device associated to the electronic messaging system):
1. Previously to the message exchange (for example at the initial configuration of the system), each system user (user equipment) is associated (for example, by the system/application performing this solution) with a pair of cryptographic keys (a private key and a public key): among other things, this allows to univocally associate each system user with their real identity (the identity of the real users, for example, the identity of a real person). This key pair may be represented by digital certificates. The univocal association of user identities with real users allows also to univocally identify the involved users and denying the possibility of fake identities in the messaging system.
   The pair of cryptographic keys is associated to the users and not to the conversation between them. As it will be explained later, each message exchange to be secured (which may correspond to the whole conversation or to a part of it) usually will have its own ID (contract ID) regardless the number of users which take part in the conversation.
2.A. Local blockchain is used: A starting block is created in the local memory (physical memory) of ones of the user devices (user equipments). It could be the user device starting the conversation or any other user device taking part in the conversation. The message exchange (whose integrity and non-repudiation is to be ensured) can cover the whole conversation between the users or only one or several parts of the conversation. This starting block (first block) may include the hash of some time-related publicly-available information (e.g., the fist news in a newspaper webpage or any other public time-related information). The block will be used as starting block for the blockchain associated with the message exchange to be secured and will be synchronized with the other users participating to the message exchange. Each user device will store this first block (and the rest of blocks of the blockchain) in a physical memory of the user device. In case that two users, taking part of the conversation, start a new block (to be synchronized) at the same time, this conflict (collision) will be solved with the known mechanism used by the blockchain to manage conflicts (collisions).
   The local blockchain represents a decentralized and consensual database, where all the participants will write on (e.g. in a random order). In this case, the user creating the starting block will usually be the user in charge of granting mining, access and synchronization permission to the other users in the message exchange over the blockchain, in order to allow the correct functioning of the system.
2.B. External blockchain is used: As an alternative, depending on the implementation and technological needs of the specific solution, an external blockchain (provided by a third party or publicly distributed) may be used. In any case, the selected blockchain guarantees that no part of the message exchange can be altered, as the modification of any block will cause the break of the enchaining of the blocks and will be identified by all the participants in the message exchange. This external blockchain may be stored and managed by an electronic device, for example by a server (usually belonging to the proposed system) which communicates with the user devices through a telecommunications network (of any type).

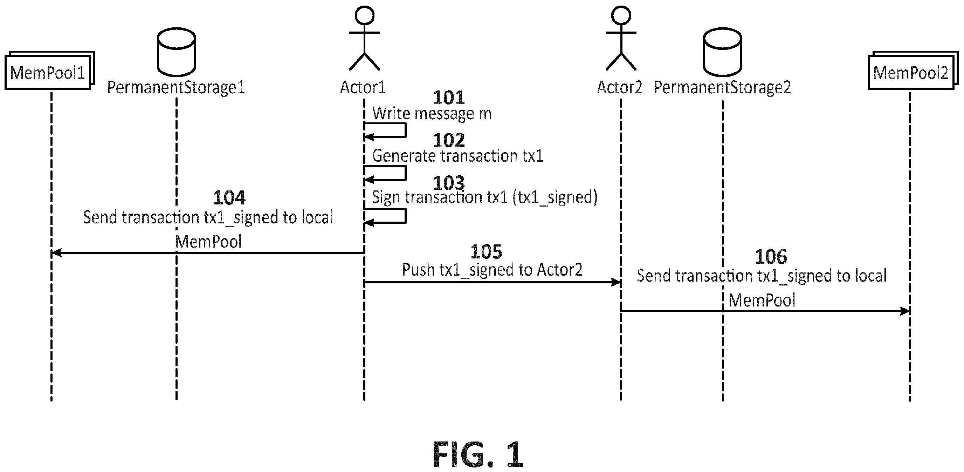

3. Figure 1 shows the main steps taken, according to an embodiment of the invention, when a message is going to be exchange by a user, actor 1. For clarity of the drawings, figure 1 shows only two users (actors 1 and 2) but more users may take part in the message exchange.
   When a user generates (101) a message (text, multimedia, voice recording, sound etc.) to be exchanged (using any electronic messaging application/system, as for example WhatsApp or any other) with one or more users, the message generated by the user (e.g. written by the user) is put together (102) with the corresponding metadata (the metadata of a generated message can be of any kind. It may include, but is not limited to, the creation timestamp, the ID of the sending user and/or of the recipient user(s), the ID of the target message exchange list, etc.). The generated transaction (message + metadata called also meta-message) is signed using the user's private key (103) previously assigned.
   Preferably, the signed transaction is sent (105) to the target message exchange recipient(s) (i.e., other user or group of users taking part in the message exchange); this is made to allow the transactions to be stored in all the users devices, so the signed messages are not lost if something happens with the user device managing the blockchain (for example, it falls down, it has a memory error, it suddenly leaves the conversation...) and the blockchain can be built.
   The signed transaction will be added to the local memory pool of the sender of the signed message (104) and each user receiving it will also add it to their local memory pool (106). In figures 1 and 2, the place (memory) where the different signed transactions are temporary stored by the user devices is called MemPool (memory pool) and the place (memory) where the blockchain blocks are stored is called Permanent Storage. This Permanent Storage must be a physical and permanent memory where the blockchain can be a long time stored. In figures 1 and 2, the two places (MemPool and Permanent Storage) have been differentiated and separately drawn because they could be different memories as they may have different properties (the MemPool can be a temporary memory and the Permanent Storage should be a permanent, physical memory) but of course a single memory could be used for both storages (that is, the MemPool and the Permanent Storage may be a single memory).
   If an external blockchain is used, in an embodiment, the signed transactions will be stored in the user devices, so steps 101-106 will be followed as in the case of a local blockchain. Then, when it is decided to build a new block of the blockchain, a user taking part in the message exchange is selected to cypher the stored group of signed transactions with the correspondent cypher key and sent it to the external electronic device (e.g. a server of the electronic messaging system) which is going to build the blockchain. In an alternative embodiment, steps 101-103 will be also performed, but the signed transaction will not be stored in the user devices but sent by a user device (typically the user device generating the message) to the server where the blockchain is to be built and stored. Then, in this latter case, when it is decided to build a new block of the blockchain the server cyphers the group of signed transactions stored in the server with the correspondent cypher key and builds the new block.
   So, each time a message is generated by any of the users, a signed transaction (including the generated message) is stored in the local memory pools of the users or in the external device (e.g. server) storing the transactions.
4. Depending on the implementation and on the technological needs of the specific implementation, the whole conversation may be secured or, not the whole conversation but only a specific part or parts of the conversation (only the relevant ones) may be selected by any of the users to be secured (i.e. to be registered into the system or, in other words, specific part or parts of the conversation whose integrity and non-repudiation is to be ensured). This (identifying the part of the conversation to be secured) can be done for instance using specific messages or specific keywords in the conversation (e.g., "/start" and "/end") by any of the users (see for example figure 3). In this case, the message exchange included between the two keywords will be added to the specific local memory or to the external blockchain. That is, when a message (e.g. a WhatsApp message or any other type of electronic message) including a certain start keyword (e.g. /start) is identified by the system, the following messages will belong to the message exchange to be secured (using the procedure shown in section 3.). This will be done for all the messages until a certain end keyword (e.g. /end) is identified by the system.
5. After storing the signed transactions (each transaction including a generated message) for a certain time, when a certain triggering event happens, a new block of the blockchain is generated.
   This block triggering event can be of different types: For example, the block triggering event may be that the signed transactions stored in the local memory pool (in case of using a local blockchain) or in the external device storing the transactions (in case of using an external blockchain) has reached a given pre-established maximum size. And/or this block triggering event can be that a pre-established specified time limit has passed (if at least one message has been generated, that is, the memory storing the signed transactions is not empty). And/or this block triggering event can be that the conversation has finished or that a specific end message has been entered by any of the users (if the users/implementation decide to store only relevant and selected parts of the message exchange, see section 4.).
5.A. If a local blockchain is used, a user taking part in the message exchange is selected to add the current content of the memory pool to a new block of the blockchain. This user adding the new block will usually be the user creating the starting block (see section 2.A) but it could be any other user taking part in the message exchange (as all the users will have all the signed transactions stored in tis local memory pool). Figure 2 shows the main steps taken, according to an embodiment of the invention, for adding a new blockchain to the local blockchain. For clarity of the drawings, figure 2 shows only two users (actors 1 and 2) but more users may take part in the message exchange. This operation (adding a new blockchain) may be executed following the following steps:
   - The user in charge of adding the new block (B1 in figure 2) retrieves from its local memory pool the group of signed transactions that has not being added yet to the blockchain (201, 202). The group of retrieved transactions are called list of unconfirmed transactions as the transactions has not been yet secured in a blockchain so it can be said that they are unconfirmed. If the memory pool is only employed to store the signed transactions, this list of signed transactions will correspond to the current content of the memory pool as usually the memory pool is emptied of transactions after creating a new block.
   - The user mines (and adds) the new block including the retrieved signed transactions to its local blockchain. In the new block, it will be typically included (a hash of) the group of signed transactions retrieved and (a hash of) the content included in one or more of the previous blocks. Then, the user stores the updated blockchain in its local permanent memory (203) and preferably delete the transactions contained in the block from the local memory pool (204). These transactions are called confirmed (or confirmable) transaction as they form part of a blockchain so their integrity can be verified.
   - The user shares the new block with the other ones or more participant(s) of the message exchange (205). This allow all the participants (users) in the message exchange, by comparing the new block with the previous blocks of the blockchain and/or with the transactions stored in their local memory, to verify the content of the block as messages actually exchanged (sent or received), or to identify eventual errors and reject messages or communications which did not take place.
   - If all the verifications are correct, the other users add the received block to their local blockchain (206) and all the users delete the transactions contained in the block from the local memory pool (207).
5.B. If an external blockchain is used (see figure 3): An identifier (contract ID) is univocally associated to said message exchange and shared with the involved users (taking part in said message exchange). A cypher key is also associated with said contract ID and shared as well with the involved users (said cypher key will be used to cypher the signed transactions before adding them to the blockchain). This sharing of the contract ID and cypher key may be done at the beginning of the message exchange to be secured (the whole conversation or only a part of it) as shown in figure 3. In another embodiment, the contract ID is shared at the beginning of the message exchange to be secured and the cypher key is shared when the message exchange to be secured has finished.

As explained before, the signed transactions may be stored in the users devices and when it is decided to build a new block of the blockchain (because a certain time has elapsed, because a maximum storage size has been reached or because the end of the message exchange to be secured has arrived) a user device (for example, through an application running in the user device) cyphers the stored group of signed transactions with the correspondent cypher key (the cypher key associated to the contract ID of the message exchange to which the signed transactions belong to) and sent it to the server (service database in figure 3) which is going to build the blockchain. In an alternative embodiment, the signed transactions are already stored in the server so when it is decided to build a new block of the blockchain (because a certain time has elapsed, because a maximum storage size has been reached or because the end of the message exchange to be secured has arrived) the server cyphers the group of transactions with the correspondent cypher key (the cypher key associated to the contract ID of the message exchange to which the signed transactions belong to).

In both embodiments (the cyphering being made in a user device or in the server) a new block is built by the server with the group of ciphered transactions. The server mines (and adds) the new block including the group of ciphered transactions to the existing blockchain. In the new block, it will be included (a hash of) the list of transactions received and (a hash of) the content included in one or more of the previous blocks. Then, the server stores the updated blockchain.

The cyphered message exchange will be stored in the blockchain (in one or more blocks) and identified (usually in a publicly available server) by associating it with the corresponding contract ID. The message exchange will also be associated with metadata (the stored metadata may include, but is not limited to, the beginning and end timestamp of the message exchange block(s), the ID of the involved users, the number of messages exchanged, etc.). The storing, cyphering and registration in the blockchain and the server may be executed by a specific bot in the messaging system.

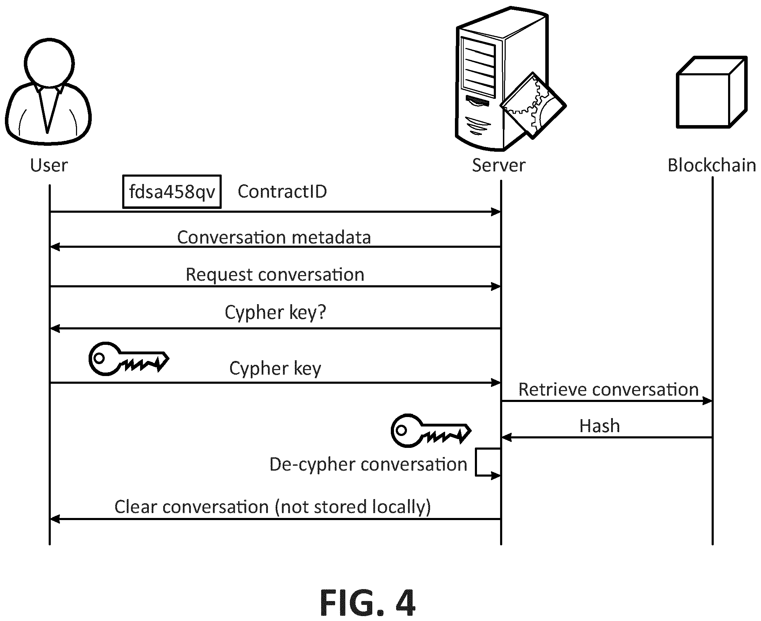

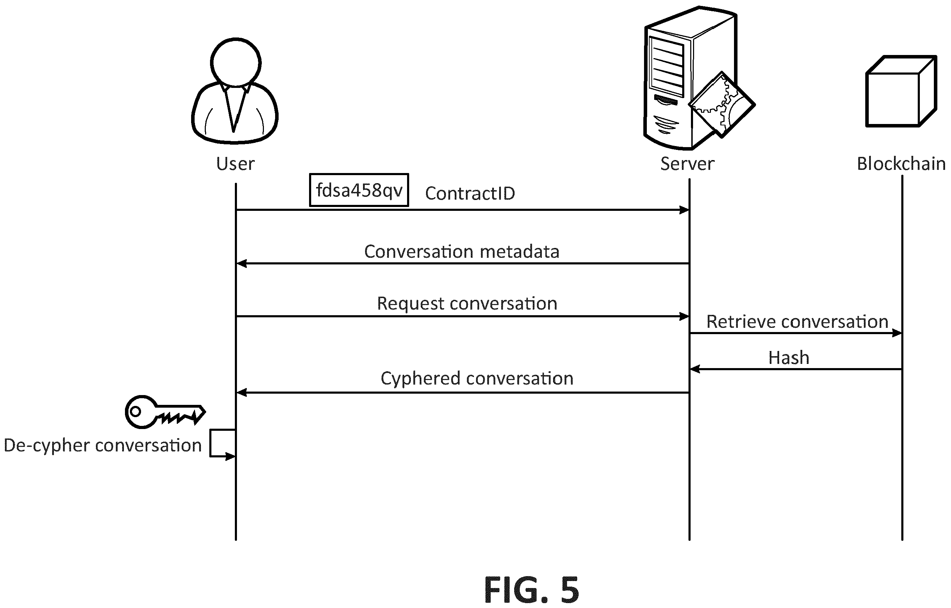

In order to retrieve the message exchange (a whole conversation or a part of it), the user may then retrieve it with the contract ID and de-cypher it using the cypher key, or share that information with someone needing to verify the message exchange (e.g., a judge needing to verify a contract or other kind of evidence). An example of conversation retrieving may be seen in Figure 4, or Figure 5 depending on if the conversation is de-cyphered and saved in the system server (figure 4) or in the user device (figure 5). In the figures, a whole conversation is retrieved but the same applies for retrieve only a part of the conversation. In this embodiment, the user sends the Contract ID to the server, to identify the message exchange he wants to access (the conversation in the cases shown in figures 4 and 5). The server sends the conversation metadata to the user, the user checks that the metadata corresponds to the message exchange he wants to retrieve and request the message exchange to the server (alternatively, the server can retrieve the message exchange when receiving the contract ID, without an explicit request from the user). The server retrieves the block(s) of the requested message exchange from the blockchain, verify that the content of the block(s) is correct (by comparing them with the information in other blocks of the blockchain) and deciphers the group of transactions and sends it to the user (figure 4) or sends the ciphered group of transactions to the user where it is deciphered (figure 5).

Thanks to this sequence of operations, the proposed solution allows to guarantee the integrity and non-repudiation of the message exchange, as the sequence of messages may be verified by verifying the corresponding blockchain, on each one of the involved user devices, without having to involve the other user devices or in the external blockchain. Furthermore, such property may be verified over the whole conversation or over a single portion of it, allowing to minimize eventual exposure of confidential data, in the case in which a specific part of the conversation was not selected by the users to be recorded/secured.

The described solution does not only work for textual messages, but also for audio messages or any kind of multimedia and other file attachments, as any kind of message may be correctly concatenated to the hash of the previous ones and hashed itself to form the blockchain. In a similar way, the described solution not only works for message exchanges between two users, but also for group message exchanges, as each user in the group keeps, in the case of local blockchain, a synchronized local copy of the blockchain corresponding to the message exchange.

The proposed solution represents a layer which can be added to traditional electronic messaging systems (WhatsApp or any other), including cyphered and private traditional messaging systems, to grant them the integrity and non-repudiation functionalities. Actually, the whole security procedure shown in figures 1 and 2 is transparent for the user; that is, the user only sees the content of the electronic messages exchanged by the users taking part in the conversation (through the traditional electronic messaging systems), but the users do not see any of the internal steps (previously explained) performed by the proposed solution, to secure the conversation. The proposed solution relies on other known protocols, used in the electronic messaging systems (such as WhatsApp or any other) on which the solution is applied, to guarantee the confidentiality of the message exchange.

Finally, for what concerns the dynamic nature of messaging groups (i.e., users joining or leaving the messaging group), different cases should be distinguished to explain how the proposed solution handles them. In particular:
- If a decentralized blockchain (local blockchain) is used, when a user (and, consequently, its user device) leaves a conversation, the local blockchain of the message exchange will stop to be synchronized with the local blockchain stored in the leaving user (that is, the new block (206) will not being sent to this leaving user device). The leaving user will hence only be able to access the part of the conversation he participated into. If a user, instead, joins a conversation, it will start synchronizing the current block (that is, from the time he joins the conversation, the new block will be sent to this new user). Similarly, to the previous case (a user leaving the conversation), this will result in users not being able to access the conversation they were not participating into.
- If an external blockchain is used, when a new user joins a group or a user leaves the group, the contract ID may be changed, together with the cypher key, the previous conversation is cyphered and stored, and a new contract ID and cypher key are shared with the users for the conversation starting from the change point on. Similarly to the previous case, this results in users not being able to access the conversation they were not participating into.
- Finally, in both previous cases, if a specific portion of conversation is selected to be registered into the system, and a user leaves the group before the end of the selected portion, in an embodiment he will not receive the cypher key of the conversation as the cypher key will be shared when the message exchange has finished. While if a user joins the group in the middle of a conversation selected to be registered, he will not receive the contract ID, as the contract ID is shared at the beginning of the selected block. Similarly to the previous cases, this results in users not being able to access the conversation they were not participating into.

The description and drawings merely illustrate the principles of the invention.

Although the present invention has been described with reference to specific embodiments, it should be understood by those skilled in the art that the foregoing and various other changes, omissions and additions in the form and detail thereof may be made therein without departing from the scope of the invention as defined by the following claims. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A method for ensuring the integrity and non-repudiation of an electronic message exchange between a group of several electronic user devices, each user device being associated with a different user of an electronic messaging system, the method comprising the following steps:
a) Assigning to each user of the group, a private cryptographic key and a corresponding public cryptographic key;
b) When any user device of the group generates a message belonging to the message exchange:
b1) The user device generating a transaction formed by the generated message together with metadata associated with the generated message and signing the transaction with the private key of the associated user;
b2) The user device sending the signed transaction to the rest of user devices of the group and storing the signed transaction in a local memory;
b3) The rest of user devices receiving the signed transaction and storing the signed transaction in a local memory of each user device;
c) When a new block triggering event happens, a user device of the group retrieving the signed transactions stored in its local memory since the last block of an existing blockchain has been created;
d) An electronic device mining a new block for the existing blockchain and adding it to the existing blockchain and storing the resulting blockchain including the new block in a local memory of the electronic device, where the new block includes at least the retrieved signed transactions of step c).

2. A method according to claim 1, where the electronic device performing step d) is the user device which has retrieved the signed transactions in step c), and where the method further comprises:
- The user device which has retrieved the signed transactions in step c) sending the new block to the other user devices of the group;
- After receiving the new block, each of the rest of user devices of the group, after verifying that the new block is correct, adding the received block to their existing local blockchain stored in each user device.

3. A method according to claim 2 where the first block of the blockchain is created by a user device of the group of user devices and sent to the rest of user devices of the group; where said first block includes a hash of some time-related publicly-available information.

4. A method according to any of the previous claims 2-3 where the memory where the blockchain is stored, is a permanent local memory.

5. A method according to claim 4 where the permanent local memory is different to the local memory where the signed transactions are stored.

6. A method according to claim 1, where the electronic device performing step d) is a server and step d) comprises:
- The server receiving, from the user device which has retrieved the signed transactions, the signed transactions ciphered with a cypher key associated to a contract ID identifying the message exchange, where the contract ID and the cypher key are previously shared with all the user devices of the group;
- The server mining the new block including at least the ciphered signed transactions into the existing blockchain stored in the server and storing the updated blockchain in the server.

7. A method according to claim 6 where the method further includes:
- The server receiving from a user device a Contract ID identifying a message exchange;
- The server retrieving the one or more blocks belonging to the requested message exchange from the blockchain and verifying that the content of the one or more blocks is correct;
- The server deciphering, with a cypher key previously got from the user, the group of signed transactions included in the one or more blocks and sending the deciphered group of transactions to the user device or sending the ciphered group of transactions to the user device without deciphering them.

8. A method according to any of the previous claims, where the new block triggering event is at least one of the following: the signed transactions stored in the local memory of the user device have reached a given pre-established maximum size; a pre-established specific time limit has passed from the creation of a previous block of the blockchain; the conversation between the group of user devices is finished or a pre-established specific message exchange end message has been entered by any of the users of the group.

9. A method according to any of the previous claims, where the generated message may include text and/or sound and/or video and/or an attached file.

10. A method according to any of the previous claims, where the method further includes, after step d), deleting the signed transactions retrieved in step c), from the local memory of the user devices of the group.

11. A method according to any of the previous claims, where the message exchange whose integrity and non-repudiation is to be ensured, is not the whole conversation between the group of user devices but a part of the whole conversation, where said part is identified by: any of the user devices generating a pre-established specific message to identify the start of the message exchange whose integrity and non-repudiation is to be ensured and any of the users generating a different pre-established specific message to identify the end of the message exchange whose integrity and non-repudiation is to be ensured.

12. A system for ensuring the integrity and non-repudiation of an electronic message exchange between a group of several electronic user devices, each user device being associated with a user, the system comprising:
- A processor configured to assign to each user of the group a private cryptographic key and a corresponding public cryptographic key;
- The group of electronic devices, each comprising a processor configured to:
- When a user device generates a message belonging to the message exchange, generate a transaction formed by the generated message together with metadata associated with the generated message; sign the transaction with the private key of the associated user; send the signed transaction to the rest of users of the group and store the sent or received signed transaction in a local memory;
where in at least one of the user devices of the group, the processor is also configured to:
- When a new block triggering event happens, retrieve the signed transactions stored in its local memory since the last block of an existing blockchain has been created;
Where the system further includes an electronic device configured to: mine a new block and add it to the existing blockchain, the new block including at least the retrieved signed transactions and store the resulting blockchain including the new block in a local memory of the electronic device.

13. A system according to claim 12 where the electronic device is the user device retrieving the signed transactions and where said electronic device sends the new block to the other user devices of the group and where each of the rest of user devices of the group, after verifying that the new block is correct, add the received block to the local blockchain stored in each user device.

14. A system according to claim 12 where the electronic device is a server configured to:
- Receive, from the user device retrieving the signed transactions, the signed transactions ciphered with a cypher key, associated to a contract ID identifying the message exchange, where the contract ID and the cypher key are previously shared with all the user devices of the group;
- Mine the new block including at least the ciphered signed transactions into an existing blockchain stored in the server and store the updated blockchain in the server.

15. A non-transitory digital data storage medium for storing a computer program which comprises instructions causing a computer executing the program to perform the method according to any of the claims 1-11.
